# EUROPÄISCHE PATENTSCHRIFT

(11) **EP 3 433 580 B1**
(45) Veröffentlichungstag und Bekanntmachung des Hinweises auf die Patenterteilung: **29.04.2026**
(21) Anmeldenummer: 17711611.8
(22) Anmeldetag: 14.03.2017
(51) Int. Cl.: G01C 21/26, B60W 50/00, G08G 1/00, G08G 1/0962, H04W 4/44, G01C 21/00

(54) **VERFAHREN UND VORRICHTUNGEN ZUM BEREITSTELLEN VON DATEN FÜR EIN FAHRERASSISTENZSYSTEM EINES KRAFTFAHRZEUGS**
METHOD AND DEVICES FOR PROVIDING DATA TO A DRIVER ASSISTANCE SYSTEM OF A MOTOR VEHICLE
PROCÉDÉ ET DISPOSITIF DE FOURNITURE DE DONNÉES POUR UN SYSTÈME D'AIDE À LA CONDUITE D'UN VÉHICULE À MOTEUR

(30) Priorität: 23.03.2016 DE 102016204805
(43) Veröffentlichungstag der Anmeldung: 30.01.2019
(73) Patentinhaber: Bayerische Motoren Werke Aktiengesellschaft, 80809 München (DE)
(72) Erfinder: BEHRENDT, Stephan, 82152 Planegg (DE); JANSEN, Axel, 85716 Unterschleissheim (DE)
(86) Internationale Anmeldenummer: PCT/EP2017/055980
(87) Internationale Veröffentlichungsnummer: WO 2017/162482

(56) Entgegenhaltungen:
- DE-A1- 102010 034 140
- DE-A1- 102010 038 970
- DE-A1- 102011 083 399
- US-A1- 2009 299 625
- US-A1- 2012 027 221

## Beschreibung

Die vorliegende Erfindung betrifft allgemein Verfahren und Vorrichtungen zum Bereitstellen von Daten, insbesondere kartenbasierten bzw. georeferenzierten Daten, für ein Fahrerassistenzsystem eines Kraftfahrzeugs und insbesondere zum Bereitstellen von Daten für einen elektronischen Horizont eines Kraftfahrzeugs.

Ein Navigationssystem kann auch als Sensor für andere Fahrerassistenzsysteme (englisch Advanced Driver Assistance Systems, ADAS) eines Fahrzeugs dienen, um deren Funktionsumfang zu verbessern bzw. zu erweitern. Dabei werden als Fahrerassistenzsysteme elektronische Zusatzeinrichtungen in Kraftfahrzeugen zur Unterstützung des Fahrers in bestimmten Fahrsituationen verstanden. Hierbei stehen oft Sicherheitsaspekte, aber auch die Steigerung des Fahrkomforts im Vordergrund. Ein weiterer Aspekt ist die Verbesserung der Ökonomie. Zur Unterstützung der Fahrerassistenzsysteme können ortsbezogene Informationen von einem Navigationssystem bzw. einer sogenannten Head-Unit, im Folgenden auch als Haupteinheit bezeichnet, eines Infotainmentsystems an ein oder mehrere andere Steuergeräte von Fahrerassistenzfunktionen im Fahrzeug übermittelt werden. Die Head-Unit fungiert hier sozusagen als Server, während die einzelnen Steuergeräte bzw. Fahrerassistenzsysteme als Clients wirken. Die übermittelten ortsbezogenen Informationen werden in der Fachsprache oftmals auch als elektronischer Horizont bezeichnet. Einige Beispiele für Fahrerassistenzsysteme sind in US 2009/299625 A1, DE 10 2010 034140 A1 oder DE 10 2011 083399 A1 beschrieben.

Systeme zur Erzeugung eines elektronischen Horizonts auf Basis von digitalen Straßenkarten sind bekannt. Diese Systeme nutzen verschiedene Protokolle zur Verteilung der Informationen im Fahrzeugnetzwerk wie beispielsweise ADASIS v2, ADASIS v3 und BMW ADAS 2.1. Typischerweise findet der CAN-Bus (CAN = Controller Area Network) als Kommunikationskanal in diesem Kontext Anwendung. Die Protokolle basieren auf einem extrahierten Navigationsgraph in Form eines oder mehrerer Pfade (ADASIS v2 und v3) oder eines Baums (ADAS 2.1). Ein Navigationsgraph wird als Referenzsystem für eine entsprechende Attribuierung und somit eine Informationsverteilung verwendet. Als Attribute einer digitalen Straßenkarte können im Folgenden Merkmale und/oder Eigenschaften dieser Merkmale verstanden werden. Merkmale sind in der digitalen Straßenkarte geeignet berücksichtigte Möglichkeiten für örtliche Ausprägungen realer Straßen oder sonstiger Objekte, wie beispielsweise Straßenklassen, Geschwindigkeitsbeschränkungen oder Verkehrsschilder. Diese Merkmale haben ortsabhängig spezielle Eigenschaften.

Die Entscheidung, welche Elemente (auf Basis von topologischen Links bzw. Segmenten) aus einer digitalen Navigationskarte in den elektronischen Horizont mit aufgenommen werden, obliegt dabei üblicherweise der Head-Unit. Sie kann mit verschiedenen Algorithmen einen Fahrweg, der mit höchster Wahrscheinlichkeit befahren wird (auch als MPP = Most Probable Path bezeichnet), bestimmen und in diese Richtung die Karte explorieren. Anschließend kann, je nach verwendeter Strategie, in entsprechende Querstraßen exploriert werden. Mit anderen Worten kann der elektronische Horizont Informationen zum vorausliegenden Straßennetz (Topologie) beinhalten, wobei nur die Straßen relevant sind, die von der aktuellen Position des Fahrzeugs erreicht werden können und die mit einer gewissen Wahrscheinlichkeit auch tatsächlich befahren werden.

Die Länge des entsprechenden elektronischen Horizonts wird dabei durch verschiedene Faktoren wie beispielswiese die Dichte der Informationen im jeweiligen Gebiet oder der verwendeten Kodierung im Format beeinflusst. Typischerweise beträgt eine Vorausschaulänge des elektronischen Horizonts etwa 500 m bis 6 km, abhängig von Anforderungen der den elektronischen Horizont nutzenden Fahrerassistenzsysteme.

Da verschiedene Fahrerassistenzfunktionen im Fahrzeug verschiedene Vorausschaubereiche benötigen, kann der elektronische Horizont verschiedene Ausprägungen haben. Zum Beispiel eine 2D-Ausprägung, welche neben dem wahrscheinlichsten Fahrweg auch entsprechende Verästelungen enthält oder eine 1D-Vorausschau, welche nur dem wahrscheinlichsten Fahrweg oder im Allgemeinen dem Verlauf einer geplanten Route folgt. So können verschiedene Fahrerassistenzfunktionen mit einem unterschiedlichen Grad an Informationen versorgt werden.

Die oben genannten derzeitig verfügbaren Fahrerassistenz- bzw. ADAS-Protokolle für die Übertragung des elektronischen Horizonts erreichen bereits heute Grenzen der Übertragungsmöglichkeit. Die Ausdehnung bzw. Vorausschaulänge des Vorausschaubereiches wird über die Dichte vorhandener ortsbezogener Attribute (wie z.B. Geschwindigkeitsbeschränkungen, Steigungen, Krümmungen, etc.) beschränkt. Neue Attribute/Merkmale können nicht hinzugefügt werden, da die Nachrichten bzw. Protokolle im Allgemeinen nicht mehr um neue Felder ergänzt werden können. Eine Übertragung von hochgenauen Kartendaten für zukünftige Fahrerassistenzsysteme, wie beispielsweise eines exakten Fahrstreifenmodells inklusive der zugrundeliegenden Geometrie, ist mit aktuellen ADAS-Protokollen auf Basis von CAN nicht möglich. Eine Erhöhung der Bandbreite durch den Wechsel der zugrundeliegenden Schicht, z.B. eine Wechsel von CAN auf Ethernet, hilft nur bedingt bei diesen Herausforderungen, da bereits Kodierungsformate, welche in den ADAS-Protokollen verwendet werden, nicht für diese Art von Informationen gedacht sind. Diesen Lösungsansatz verfolgt z.B. das ADASIS v3 Protokoll. Allerdings wird auch hier wieder auf einzelne Pfade als Ausschnitt aus der Navigationskarte gesetzt.

Ein weiterer Nachteil der aktuell bekannten ADAS-Protokolle und Implementierungen ist die Tatsache, dass die Head-Unit als Quelle für navigationsbasierte Informationen die Berechnung des wahrscheinlichsten Fahrwegs durchführt. Dadurch müssen alle angeschlossenen Fahrerassistenzfunktionen mit diesem wahrscheinlichsten Fahrweg arbeiten. Allerdings können verschiedene Fahrerassistenzfunktionen verschiedene Ausprägungen des wahrscheinlichsten Fahrwegs bevorzugen. Beispielsweise möchte eine Fahrerassistenzfunktion stets dem Straßenverlauf folgen und immer versuchen auf die nächst höherer Straßenklasse (z.B. ein Wechsel von Landstraße auf Autobahn) aufzusteigen, während andere Fahrerassistenzfunktionen eine Geradeausfahrt bevorzugen. Dies kann dazu führen, dass von der Fahrerassistenzfunktion benötigte Informationen im elektronischen Horizont fehlen, da diese bereits von der Head-Unit herausgefiltert wurden.

Durch die fest strukturierten Protokolle der aktuellen Ausprägungen des elektronischen Horizonts müssen bereits zum Zeitpunkt der Konzeption des jeweiligen Protokolls alle benötigten Informationen in Form von Attributen festgelegt und definiert sein. Eine nachträgliche Erweiterung um zusätzliche Attribute ist in der Regel mit neuen Entwicklungsumfängen und entsprechenden Kosten verbunden. Dadurch sind aktuelle Ausprägungen des elektronischen Horizonts sehr starr und können nicht flexibel auf neue Anforderungen zukünftiger Fahrerassistenzfunktionen, wie beispielsweise das hochautomatisierte Fahren, reagieren.

Die Vernetzung zwischen aktuellen und vor allem zukünftigen Fahrzeugen mit entsprechenden Backend-Diensten nimmt stetig zu. Dadurch können Karteninformationen immer schneller aktualisiert werden. Angefangen bei Aktualisierung der Topologie der entsprechenden Karte bis hin zur hochdynamischen Aktualisierung von Verkehrszuständen und aktuell angezeigten Werten von Wechselverkehrszeichen. Diese hochdynamischen Daten lassen sich ebenfalls nicht mit Hilfe von aktuellen Ausprägungen des elektronischen Horizonts im Fahrzeug übertragen.

Den verschiedenen Fahrerassistenzfunktionen im Fahrzeug haben unterschiedliche Anforderungen an die Ausprägung der dargestellten Informationen aus der digitalen Karte. Manche Fahrerassistenzfunktionen benötigen sehr detaillierte Informationen sowohl an der aktuellen Position als auch entlang des gesamten Straßennetzwerkes (Topologie) im Vorfeld des Fahrzeuges. Andere Fahrerassistenzfunktionen benötigen lediglich einzelne Attribute zur Topologie und/oder zur aktuellen Fahrzeugposition (z.B. die aktuell erlaubte Höchstgeschwindigkeit). Die verschiedenen verfügbaren Ausprägungen des elektronischen Horizonts können sich derzeit nicht flexibel an diese Anforderungen anpassen. Alle Funktionen müssen sich auf einheitliche Schnittstellen einigen und so mit teilweise zu viel bzw. zu wenig Information zu Recht kommen.

Somit kann es als eine Aufgabe der vorliegenden Erfindung betrachtet werden, den vorbekannten Stand der Technik betreffend die Bereitstellung von kartenbasierten Daten in einem Kraftfahrzeug weiterzubilden und zu verbessern.

Dem wird durch Verfahren und Vorrichtungen mit den Merkmalen der unabhängigen Patentansprüche Rechnung getragen. Vorteilhafte Ausgestaltungen und Weiterbildungen sind Gegenstand der abhängigen Ansprüche.

Gemäß einem ersten Aspekt schaffen Ausführungsbeispiele der vorliegenden Erfindung ein Verfahren zum Bereitstellen von Daten, insbesondere kartenbasierten bzw. georeferenzierten Daten, für ein Fahrerassistenzsystem eines Kraftfahrzeugs. Das Verfahren umfasst ein mittelbares oder unmittelbares Übermitteln von Positionsdaten betreffend eine aktuelle oder zukünftige Position des Kraftfahrzeugs z.B. von einer fahrzeuginternen oder fahrzeugexternen Positionierungs- und/oder Navigationseinheit an das Fahrerassistenzsystem. Lediglich bei Bedarf des Fahrerassistenzsystems an zusätzlichen Informationen zu den Positionsdaten fragt es die zusätzlichen Informationen bei einem fahrzeuginternen oder fahrzeugexternen Server an. Es finden also bedarfsgesteuerte Anfragen statt - kein Bedarf, keine Anfrage, bei Bedarf, Anfrage. In Reaktion auf das Anfragen übermittelt der fahrzeuginterne oder fahrzeugexterne Server die zusätzlichen Informationen mittelbar oder unmittelbar an das Fahrerassistenzsystem.

Vorgeschlagen wird also ein Bereitstellen von Navigationsdaten auf unterschiedlichen Ebenen. Positionsdaten (ggf. zur aktuellen Position) werden dem Fahrerassistenzsystem regelmäßig von der Positionierungs- bzw. Navigationseinheit als eine Art Basisinformation übermittelt. Das Übermitteln der Positionsdaten mit der aktuellen Fahrzeugposition kann also als eine grundlegende oder notwendige Übermittlung angesehen werden. Lediglich bei Bedarf fordert das Fahrerassistenzsystem bzw. dessen zugeordnetes Steuergerät weitere auf die Positionsdaten bzw. die aktuelle Fahrzeugposition bezogene Daten an, wie zum Beispiel Attribute der aktuellen Fahrzeugposition oder weitere topologische Daten zu der aktuellen Fahrzeugposition. Bei den zusätzlichen Informationen kann es sich auch um georeferenzierte volatile Daten handeln: zum Beispiel Wetter, Verkehrsfluss, etc. Ausführungsbeispiele können beispielsweise vorteilhaft zum skalierbaren Bereitstellen von kartenbasierten Daten für einen elektronischen Horizont verwendet werden.

Bei der Navigationseinheit kann es sich um eine fest im Fahrzeug installierte Infotainment- oder Navigations-Head-Unit handeln. Es sind aber auch Ausführungsbeispiele denkbar, in denen als Navigationseinheit ein nicht fest im Fahrzeug verbautes Positionierungs- bzw. Navigationssystem verwendet werden kann, wie z.B. ein Smartphone oder dergleichen. Die Navigationseinheit kann also ausgebildet sein, um wenigstens aktuelle und/oder zukünftige Positionsdaten bereitzustellen. Es kann sich also auch um einen schlichten Positionsgeber ohne weitergehende Funktionalitäten handeln. Die Navigationseinheit kann optional aber auch komplexere Funktionen aufweisen, wie z.B. Routenberechnung und/oder Bereitstellen von weiteren kartenbasierten Attributen. Bei dem Server kann es sich ebenfalls um die im Fahrzeug installierte Infotainment- oder Navigations-Head-Unit (Haupteinheit) handeln. Ebenso sind aber auch fahrzeugexterne Server (z.B. Internet) denkbar.

Unter Positionsdaten können in manchen Ausführungsbeispielen Koordinaten einer aktuellen Fahrzeugposition verstanden werden. Positionsdaten können aber zukünftige Positionsdaten bzw. Koordinaten entlang einer geplanten Route oder einem Pfad, dem zu folgen als wahrscheinlich angesehen wird, umfassen. Eine aktuelle oder zukünftige Position des Fahrzeugs (Current Car Position, CCP) kann mit verschiedenen Detailgraden beschrieben werden, wie beispielsweise die reale Position in WGS84-Koordinaten (World Geodetic System 1984), also z.B. eine rohe Position auf Basis von GPS und Fahrzeug-Odometrie. Eine weitere Möglichkeit ist beispielsweise eine Angabe eines Kartenausschnitts (z.B. Kartenkachel, Kachel-ID), in welchem sich die aktuelle Fahrzeugposition befindet. Zusätzlich dazu kann ein topologisches Element dieses Kartenausschnitts, wie z.B. ein Knoten oder eine Kante (Link-ID), angegeben werden, auf welchem sich das Fahrzeug aktuell befindet. Um die aktuelle Fahrzeugposition in dem Kartenausschnitt noch genauer zu identifizieren, kann zusätzlich auch noch ein sogenannter Offset-Wert angegeben werden, der bezeichnet, wo auf dem topologischen Element sich das Fahrzeug aktuell befindet. Andere Formate sind selbstverständlich ebenfalls möglich und abhängig von ihrer Verwendbarkeit im empfangenden Steuergerät.

Die Positionsdaten stellen Basisinformationen der hier vorgestellten bedarfsgesteuerten Datenbereitstellung dar, die dem Fahrerassistenzsystem von der Positionierungs- bzw. Navigationseinheit mindestens bereitgestellt werden. Man könnte sie auch als eine Art Basisschicht des vorgeschlagenen Protokolls verstehen. Die zusätzlichen Informationen können demgegenüber als eine bedarfsgesteuerte Zusatzschicht des Protokolls verstanden werden.

In manchen Ausführungsformen kann das Übermitteln der Positionsdaten periodisch bzw. zyklisch erfolgen, z.B. nachdem sich das Fahrerassistenzsystem bei der Positionierungs-bzw. Navigationseinheit registriert hat. Statt klassischer Push-Nachrichten kann hier also das vorgeschlagene ADAS Protokoll unterscheiden zwischen den Varianten: zyklische Übertragung der aktuellen Positionsdaten und bedarfsgesteuerte Anfrage/Antwort bezüglich der zusätzlichen (kartenbasierten) Informationen. Die zyklische Übertragung kann verwendet werden, um dem Empfänger zyklisch mit relevanten und vom Empfänger angeforderten Daten zu versorgen. Dazu kann im Falle des vorgeschlagen ADAS Protokolls ausschließlich die Übertragung der aktuellen Position zählen. Optional kann zyklisch zusätzlich eine Auswahl an Kartenattributen, die an der aktuellen Position gelten, übermittelt werden. Attribute an der aktuellen Position können durch konfigurierbare Datenformate, sogenannte DataDefinitions (Datenformatbeschreibungen), beschreibbare Attribute sein. Dazu zählen beispielsweise: die Anzahl der Fahrstreifen, die Straßenklasse, Name der Straße, Geschwindigkeitsbegrenzung, Steigungswerte, etc. Neben dem regelmäßigen der Übermitteln der Positionsdaten kann das bedarfsgesteuerte Anfragen der zusätzlichen Informationen in manchen Ausführungsformen ein Anfragen von mit den Positionsdaten assoziierten Karteninformationen einer digitalen Straßenkarte umfassen. In anderen Worten hat darüber hinaus der Fahrerassistenzsystem-Client die Möglichkeit über eine Anfrage/Antwort-Schnittstelle Karteninformationen direkt anzufragen. Dabei können die Karteninformationen mit den Positionsdaten assoziierte, also ortbezogene Attribute und/oder ortbezogene topologische Informationen umfassen, die nicht auf regelmäßiger Basis, sondern auf Anfrage hin, von dem Server (also z.B. von der Haupteinheit) an das Fahrerassistenzsystem übermittelt werden. Als Attribut einer digitalen Straßenkarte werden hier Merkmale und/oder Eigenschaften dieser Merkmale verstanden. Merkmale sind in der digitalen Straßenkarte geeignet berücksichtigte Möglichkeiten für örtliche Ausprägungen realer Straßen, wie beispielsweise Straßenklassen, Verkehrsschilder, Geschwindigkeitsbeschränkungen, Kurvenradien, Fahrbahnzustand, etc. Diese Merkmale haben ortsabhängig spezielle Eigenschaften. Topologische Informationen oder Daten hingegen bezeichnen eine Straßennetzstruktur und können dabei z.B. Abbiegerestriktionen an Straßenkreuzungen beschreiben. Unter topologischen Informationen können beispielsweise Knoten und Kanten in einem Straßennetzgraph verstanden werden, also eine Verbindung zwischen zwei Entscheidungspunkten (z.B. Kreuzung) in dem Graph.

Eine Basis der Karteninformation stellt die Topologie des Straßennetzwerkes dar. Diese Topologie kann in digitalen Straßenkarten in Form vom Graphen abgelegt werden. An die Elemente (Kanten und Knoten) dieses Graphen können dann beliebige Information in Form von Attributen gespeichert werden. In manchen Ausführungsformen des vorgeschlagenen ADAS-Protokolls kann die Topologie von den Attributen entkoppelt werden. D.h., für Kartenanfragen, die über die aktuelle Position hinausgehen, kann der Fahrerassistenzsystem-Client mit verschiedenen Methoden die Topologie abfragen und anschließend die benötigen Informationen in Form von Attributen zu diesen Topologie-Elementen abfragen.

In manchen Ausführungsformen kann das bedarfsgesteuerte Anfragen der zusätzlichen Informationen also zunächst ein Anfragen von mit den Positionsdaten assoziierten topologischen Daten umfassen. In solchen Fällen kann das Übermitteln der zusätzlichen Informationen ein Übermitteln von topologischen Daten aus mit den Positionsdaten assoziierten Kartenkacheln einer digitalen Straßenkarte umfassen. Dies erlaubt eine bedarfsgerechte Versorgung des Fahrerassistenzsystems mit topologischen Daten rund um die Positionsdaten. Es können also auf eine Anfrage hin, je nach Bedarf, ein oder mehrere topologischen Elemente (Knoten, Kanten, etc.) an das Fahrerassistenzsystem übermittelt werden. Vordefinierte Mengen an zu übermittelnden topologischen Daten sind nicht vorgesehen. Der Client kann entweder nur den aktuell befahrenen Straßenabschnitt (in Form des aktuellen Links und dem Wissen über die verbundenen Links) abfragen oder einen größeren Ausschnitt aus der Topologie. Dieser Ausschnitt kann auf einem festgelegten Kachelschema basieren, z.B. dem NDS-Kachelschema auf Level 13.

Wenn der Client die Topologie-Information erhalten kann, kann er für beliebige Elemente innerhalb diese Topologie beliebigen Attribute abfragen. Nach dem Erhalt der topologischen Daten können also, bei Bedarf, von dem Fahrerassistenzsystem noch mit den topologischen Daten assoziierte Attribute bei dem fahrzeuginternen oder -externen Server angefragt werden. Das Anfragen der zusätzlichen Informationen kann in manchen Ausführungsbeispielen also auch ein Anfragen von wenigstens einem mit den topologischen Daten assoziierten Attribut umfassen. In Reaktion auf das Anfragen, kann das wenigstens eine Attribut von dem Server an das Fahrerassistenzsystem übermittelt werden. Auch hier findet also ein bedarfsgesteuertes Anfragen von Attributen statt, so dass deren Übermittlung nur dann stattfindet, wenn das Fahrerassistenzsystem die Attribute benötigt bzw. möchte. Übertragungsressourcen können also effizient und bedarfsgerecht eingesetzt werden.

In manchen Ausführungsbeispielen kann das bedarfsgesteuerte Anfragen von topologischen Daten und/oder Attributen auch einem Abonnement der angefragten topologischen Daten und/oder Attribute von dem Fahrerassistenzsystem für die Zukunft gleichkommen. In derartigen Ausführungsformen kann also eine Anfrage bereits ausreichen, um dem Server Bedarf an den jeweiligen Daten anzuzeigen, so dass der Server diese Daten zukünftig "unaufgefordert" an das Fahrerassistenzsystem übermitteln kann, z.B. periodisch oder bei Veränderung von Attributen.

Für die Abfrage der Kartenattribute schlagen manche Ausführungsbeispiele einen Mechanismus vor, welcher es erlaubt auf Protokollebene frühzeitig genau zu beschreiben, wie Informationen übertagen werden, aber die Beschreibung der übertragenen Daten zu einem späteren Zeitpunkt erlaubt. Mit Hilfe von oben bereits erwähnten DataDefinitions kann festgelegt werden, dass sich beliebige Informationen in Form von primitiven Datentypen (wie Beispielsweise Feld von Integer) an einem Topologie-Element oder dem CCP befinden können. Die Bedeutung der Datentypen kann über die Beschreibung der DataDefinitons festgelegt werden. Aktualisierte DataDefinitons können der Head-Unit von Zeit zu Zeit bereitgestellt werden, um auf neue Fahrerassistenzsysteme reagieren zu können. Jeder DataDefinition kann eine eindeutige ID zugeordnet werden, welche Bestandteil des ADAS-Protokolls sein kann. Mit Hilfe der ID kann die entsprechende DataDefinition identifiziert werden und den primitiven Datentypen eine Bedeutung zu geordnet werden. Gemäß einigen Ausführungsbeispielen kann das Übermitteln des wenigstens einen Attributs also in einem an das Attribut angepassten Datenformat (DataDefinition) erfolgen. Dabei kann das Datenformat eine eindeutige Identifikation des Datenformats und eine Beschreibung von in dem Datenformat enthaltenen Datentypen umfassen.

Im Navigationsumfeld gibt es eine Vielzahl von Daten, welche sich oft ändern können, wie beispielsweise Wechselverkehrszeichen oder der Verkehrsfluss. Diese Daten zählen zu den volatilen oder auch dynamischen Daten. In dem vorgeschlagenem ADAS Protokoll können diese Daten ebenfalls in DataDefinitions verpackt werden und zusätzlich noch die Einstufung als dynamische Daten und eine entsprechende Lebensdauer bekommen. Mit anderen Worten kann also das wenigstens eine Attribut ein veränderliches Attribut umfassen. In manchen Ausführungsbeispielen kann die Beschreibung der in dem Datenformat enthaltenen Datentypen eine Kennzeichnung eines veränderlichen Attributs und eine diesem zugeordnete Gültigkeitsdauer umfassen.

In unterschiedlichen Implementierungen des Protokolls können die veränderlichen Attribute dann gesondert behandelt werden. In einem Beispiel kann der Client nach Ablauf der Lebens- bzw. Gültigkeitsdauer neue Daten abfragen. In anderen Worten kann das Anfragen wenigstens eines Attributs also ein erneutes Abfragen des Attributs nach Ablauf seiner Gültigkeitsdauer umfassen. Zusätzlich oder alternativ kann der Client gesondert informiert werden, wenn sich bereits abgefragte dynamische Daten geändert haben. Er kann dann entscheiden, ob er diese Daten erneut abruft. In solchen Ausführungsformen kann das Verfahren also einen Schritt des Informierens des Fahrerassistenzsystems über ein verändertes Attribut umfassen. Wenn der Client diese Daten nicht erneut abruft, braucht er über zukünftig weitere Änderungen dieser Daten auch nicht mehr informiert zu werden.

In manchen Ausführungsbeispielen erfolgt das Übermitteln der Positionsdaten und der zusätzlichen Informationen über ein fahrzeuginternes Bussystem. Mögliche Bussysteme sind beispielsweise Feldbusse wie CAN, FlexRay oder Local Interconnect Network (LIN). Weitere Ausführungsbeispiele erlauben zusätzlich oder alternativ auch eine Übermittlung der Daten über Ethernet oder weitere Local Area Network (LAN) Technologien.

Gemäß einem weiteren Aspekt schaffen Ausführungsbeispiele ein System zum Bereitstellen von Daten für ein Fahrerassistenzsystem eines Kraftfahrzeugs. Das System kann eine Positionierungs- bzw. Navigationseinheit (z.B. Head-Unit, Fahrerassistenzsystem-Server) umfassen, die ausgebildet ist, um Positionsdaten betreffend eine Position des Kraftfahrzeugs an ein Fahrerassistenzsystem (bzw. diesem zugeordnetes Steuergerät) zu übermitteln. Das System umfasst ferner ein Fahrerassistenzsystem (bzw. diesem zugeordnetes Steuergerät), das ausgebildet ist, um die Positionsdaten zu empfangen und, um bei Bedarf an zusätzlichen Informationen zu den Positionsdaten die zusätzlichen Informationen bei einem dem fahrzeuginternen oder -externen Server anzufragen. Der Server ist ausgebildet, um in Reaktion auf die Anfrage, die angefragten zusätzlichen Informationen an das Fahrerassistenzsystem zu übermitteln.

Gemäß einem weiteren Aspekt wird ein Fahrerassistenzsystem (bzw. diesem zugeordnetes Steuergerät) bereitgestellt, das ausgebildet ist, um Positionsdaten betreffend eine Position eines Kraftfahrzeugs von einer Positionierungs- bzw. Navigationseinheit zu empfangen und, um lediglich bei Bedarf an zusätzlichen Informationen zu den Positionsdaten die zusätzlichen Informationen bei der Navigationseinheit oder einem Server, insbesondere einer fahrzeuginternen Haupteinheit, anzufragen.

Gemäß einem zusätzlichen Aspekt wird auch ein Server, insbesondere eine fahrzeuginterne Haupteinheit, bereitgestellt. Der Server ist ausgebildet, um Positionsdaten betreffend eine Position eines Kraftfahrzeugs an ein Fahrerassistenzsystem zu übermitteln und, um in Reaktion auf eine Anfrage von dem Fahrerassistenzsystem, zusätzlichen Informationen zu den Positionsdaten an das Fahrerassistenzsystem zu übermitteln.

Die vorgeschlagene bedarfsgesteuerte Aufteilung des ADAS Protokolls erlaubt starke Skalierungseffekte: eine einfache Fahrerassistenzfunktion, welche nur Informationen an der aktuellen Position benötigt, braucht nur die aktuelle CCP-Information auswerten, während eine komplexe Fahrerassistenzfunktion hingegen über die Abfrage der Topologie und der entsprechende DataDefinitions beliebig komplexe Informationen bis hin zu hochgenauen Fahrstreifenmodellen abfragen kann.

Die Aufteilung in Topologie und Attribute ermöglicht ebenfalls starke Skalierungseffekte: der Client kann selber entscheiden, welche detaillierten Informationen in welchem Umfang er anfragt. Im Allgemeinen kann der Client auf einem schwächeren Steuergerät laufen als der Server und dadurch auch über weniger Speicher verfügen. Er kann sich so je nach verfügbarem Speicher und benötigten Informationsgehalt seine Anfragen gestalten. Dadurch kann der Client selbst entscheiden wie viel Informationen er wann verarbeiten muss. Bei klassischen ADAS Protokollen wird dies von Beginn an definiert und kann nachträglich nicht angepasst werden. Dadurch lassen sich beispielsweise über klassische ADAS Protokolle nur mit größeren Eingriffen hochgenaue Fahrstreifenmodelle übertragen.

Das vorgeschlagene Protokoll lebt und kann agil auf Änderungen reagieren, da zum Zeitpunkt der Definition des Protokolls in Form von zu übertragenden Datenformat noch nicht festgelegt sein muss, welche Informationen übertragen werden. So können neue Informationen auch zur Lebenszeit des Protokolls in Form von neuen DataDefinitions hinzugefügt werden. Bestehende Clients können diese Information unter Umständen nicht auswerten, werden diese Information aber auch nicht abfragen. Neue Clients kennen die neuen DataDefinitions und können diese dann verarbeiten.

Durch die vorgeschlagenen Methoden kann das Protokoll sehr effizient mit dynamischen Informationen umgehen. Klassische Protokolle erlauben keine dynamischen Informationen, da einmal übertragene Informationen nicht mehr verändert werden können. Das heißt, hier müsste alles neue übertragen werden, während bei dem vorgeschlagenem Protokoll auch einzelne Informationen neu übertragen werden können, nachdem der Client über die Aktualisierung informiert wurde.

Einige beispielhafte Ausführungsbeispiele der vorliegenden Erfindung werden nachfolgend bezugnehmend auf die beiliegenden Figuren näher erläutert. Es zeigen:
- Fig. 1: eine schematische Darstellung eines ein beispielhaften Systems zum Bereitstellen von Daten für ein Fahrerassistenzsystem eines Kraftfahrzeugs;
- Fig. 2: einen Ablauf eines Datenaustauschs zwischen einer Head-Unit und einem Fahrerassistenzsystem; und
- Fig. 3: ein Beispiel einer möglichen Übertragung zwischen Client und Server gemäß einem Ausführungsbeispiel.

Verschiedene Ausführungsbeispiele werden nun ausführlicher unter Bezugnahme auf die beiliegenden Zeichnungen beschrieben, in denen einige Ausführungsbeispiele dargestellt sind.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer", "eine", "eines" und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", aufweist" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

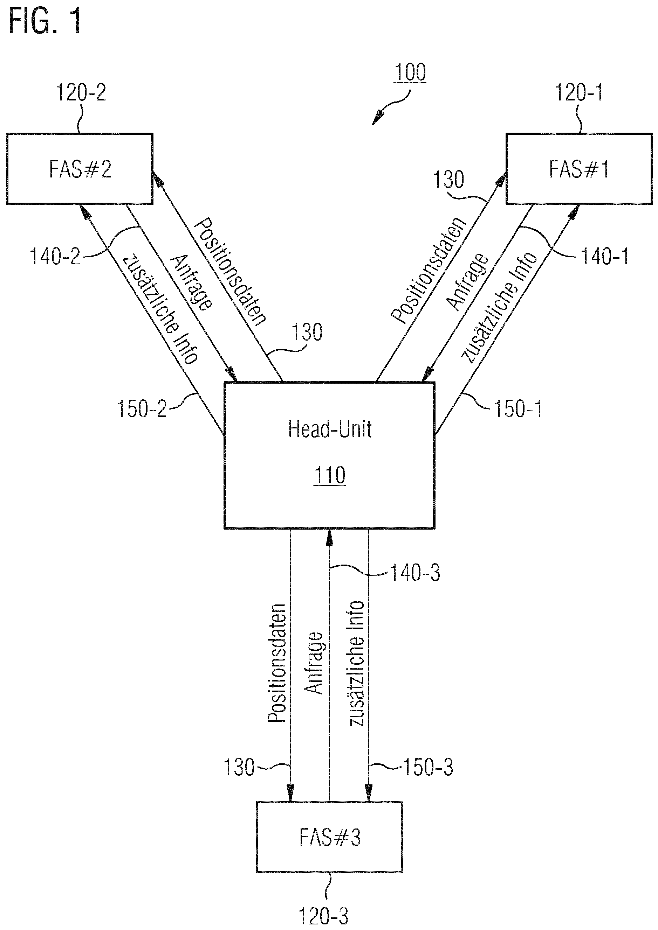

**Fig. 1** zeigt eine schematische Darstellung eines ein beispielhaften Systems 100 zum Bereitstellen von Daten für ein Fahrerassistenzsystem eines Kraftfahrzeugs, insbesondere zum Bereitstellen von Daten für einen elektronischen Horizont.

Das System 100 umfasst eine fahrzeuginterne Head-Unit 110 als Server und einige daran gekoppelte Fahrerassistenzsysteme 120-1, 120-2, 120-3 bzw. diesen zugeordnete Steuergeräte als Clients. Die Head-Unit 110 kann beispielsweise einem Infotainmentsystem des Kraftfahrzeugs zugeordnet sein. Sie kann Funktionen aus der Unterhaltungselektronik, Internettechnologie, Komfortbedienung, sowie Navigation integrieren. Die unterschiedlichen Fahrerassistenzsysteme 120-1, 120-2, 120-3 können beispielsweise über einen fahrzeuginternen Datenbus, wie z.B. den CAN-Bus, an die Head-Unit 110 gekoppelt sein. Die Fahrerassistenzsysteme 120-1, 120-2, 120-3 können in manchen Ausführungsbeispielen zumindest teilweise autonomes Fahren des Kraftfahrzeugs ermöglichen bzw. den Fahrer unterstützen.

Die Head-Unit 110 übermittelt dazu regelmäßig, z.B. periodisch oder zyklisch, aktuelle Fahrzeugpositionsdaten 130 an die angeschlossenen Fahrerassistenzsysteme 120-1, 120-2, 120-3. Die Fahrzeugpositionsdaten stellen sozusagen ein Mindestmaß an Information dar, welche zwischen Head-Unit 110 und den Fahrerassistenzsystemen 120-1, 120-2, 120-3 übertragen wird. Es sei erwähnt, dass die Fahrzeugpositionsdaten (aktuelle und zukünftige) auch von einer anderen geeigneten Navigationseinheit kommen können, die nicht notwendigerweise fest im Fahrzeug verbaut sein muss.

Je nach Funktionalität, können die Fahrerassistenzsysteme 120-1, 120-2, 120-3 unterschiedlichen Bedarf an zusätzlichen Informationen zu den aktuellen Fahrzeugpositionsdaten haben, wobei es sich bei den zusätzlichen Informationen um von mit den Positionsdaten assoziierte (also ortsbezogene) Karteninformationen einer digitalen Straßenkarte handeln kann. Daher sind in dem exemplarischen Ausführungsbeispiel die Fahrerassistenzsysteme 120-1, 120-2, 120-3 jeweils ausgebildet, um, lediglich bei jeweilgem Bedarf an zusätzlichen Informationen zu den Positionsdaten, die jeweils benötigten zusätzlichen Informationen bei der Head-Unit 110 anzufragen. In anderen Ausführungsformen könnten die zusätzlichen Informationen zusätzlich oder alternativ bei einem fahrzeugexternen Server angefragt werden. Die zusätzlichen Information werden in der Regel nicht nur an der Fahrzeugposition benötigt, sondern auch im Fahrzeugumfeld, z.B. entlang einer geplanten Route oder eines Pfades, dem zu folgen als wahrscheinlich angesehen wird. Neben Positionsdaten können also auch Informationen zur geplanten Route oder ähnliches ausschlaggebend für weitere Anfragen sein. Die entsprechenden Anfragen sind in Fig. 1 mit 140-1, 140-2 und 140-3 bezeichnet. Als Reaktion auf die jeweiligen Anfragen 140-1, 140-2 und 140-3 übermittelt die Head-Unit 110 die jeweils angefragten zusätzlichen Informationen 150-1, 150-2, 150-3 an das jeweilige Fahrerassistenzsystem 120-1, 120-2, 120-3. Zwischen den Fahrerassistenzsystemen 120-1, 120-2, 120-3 und der Head-Unit findet also jeweils ein bedarfsgesteuerter bzw. bedarfsgerechter Austausch von individuell benötigten zusätzlichen Informationen, wie z.B. kartenbasierten Daten, statt. Jedes Fahrerassistenzsystem 120-1, 120-2, 120-3 kann also individuell mit unterschiedlichen Zusatzinformationen versorgt werden.

Während die zusätzlich zu den Positionsdaten benötigte Information 150-1 des ersten Fahrerassistenzsystems 120-1 beispielsweise ein oder mehrere Kartenattribute (z.B. zulässige Höchstgeschwindigkeit), die an der aktuellen Position gelten, betreffen kann, kann die zusätzlich zu den Positionsdaten benötigte Information 150-2 des zweiten Fahrerassistenzsystems 120-2 beispielsweise topologische Daten, z.B. Straßennetzelemente, zu den Positionsdaten umfassen. Das dritte Fahrerassistenzsystem 120-3 kann beispielsweise sowohl an zusätzlichen topologischen Daten als auch die topologischen Daten betreffende Attribute als zusätzlich zu den Positionsdaten benötigte Information 150-3 interessiert sein und somit den höchsten individuellen Datenbedarf aufweisen. Das Fahrerassistenzsystem 120-3 kann beispielsweise eine komplexere Fahrerassistenzfunktion mit höherem Datenbedarf (z.B. einen Abstandsregeltempomat) implementieren.

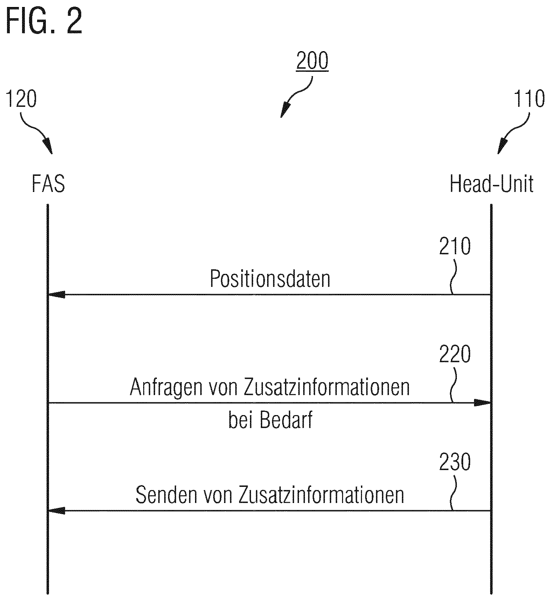

Ein grundsätzlicher Ablauf eines Datenaustauschs zwischen Head-Unit 110 und einem der Fahrerassistenzsysteme 120-1, 120-2, 120-3 ist in dem schematischen Nachrichten-Reihenfolge-Diagramm (MSC, engl. Message Sequence Chart) 200 der **Fig. 2** illustriert.

Zunächst werden in einem Schritt 210 Positionsdaten betreffend eine aktuelle Position des Kraftfahrzeugs von der Head-Unit 110 an das Fahrerassistenzsystem (FAS) 120 übermittelt. Bei Bedarf, fragt in einem Schritt 220 das Fahrerassistenzsystem (FAS) bei der Head-Unit zusätzliche Informationen (wie z.B. Attribute und/oder topologische Daten) zu den Positionsdaten an. In einem Schritt 230 sendet dann die Head-Unit 110 die angefragten bzw. benötigten zusätzlichen Informationen an das Fahrerassistenzsystem (FAS).

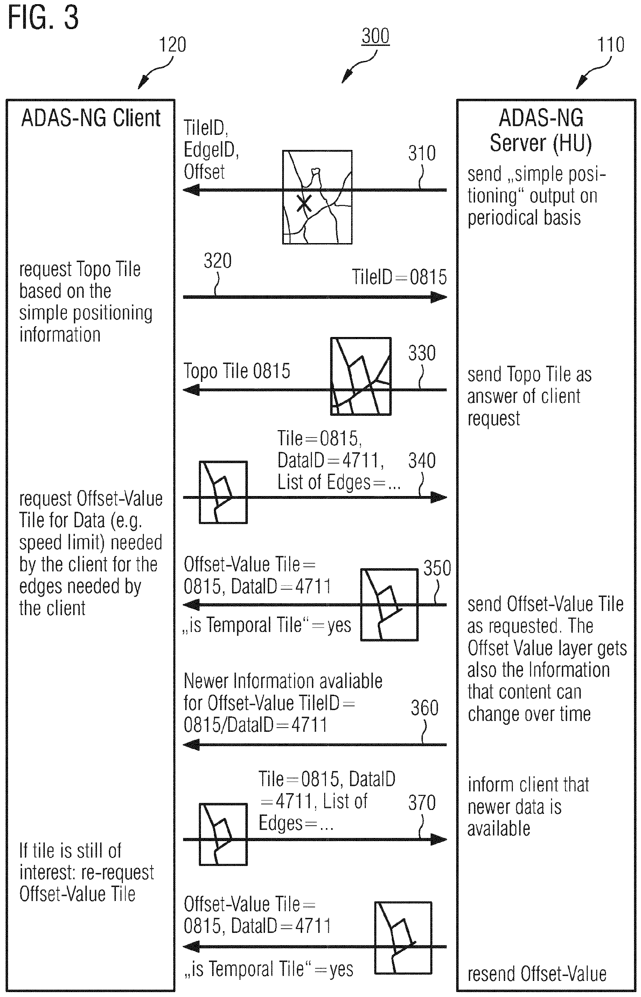

Nachdem anhand der Fig. 2 eine Kommunikation zwischen Head-Unit 110 und Fahrerassistenzsystem (FAS) vergleichsweise allgemein skizziert wurde, wird nun anhand von **Fig. 3** ein konkreteres Ausführungsbeispiel beschrieben. In Fig. 3 ist eine mögliche Kommunikation zwischen Fahrerassistenzsystem (ADAS-Client) 120 und Head-Unit (Server) 110 in einem Ausführungsbeispiel des vorgeschlagenen Protokolls dargestellt.

Der Client 120 wird hier nach Anmeldung am Server 110 mittels Nachrichten 310 zyklisch mit der aktuellen Fahrzeugposition versorgt. In dem dargestellten Beispiel wird dem Client 120 die aktuelle Fahrzeugposition in Form einer Kachel-ID (TilelD), einer Link-ID (Edge-ID) und einem Offset auf dem Link übergeben. Dabei bezeichnet die Kachel-ID einen Kartenausschnitt, in welchem sich die aktuelle Fahrzeugposition befindet. Die Link-ID bezeichnet ein topologisches Element innerhalb dieses Kartenausschnitts, wie z.B. ein Knoten oder eine Kante, auf welchem sich das Fahrzeug aktuell befindet. Der Offset bezeichnet, wo genau auf dem topologischen Element sich das Fahrzeug aktuell befindet.

Basierend auf dieser Basis-Information 310 kann der Client 120 zusätzlich benötigte Topologie-Informationen abfragen, siehe Schritt 320. In dem hier gezeigten Beispiel wird, basierend auf der einfachen Positionsinformation 310, eine Topologie-Kachel mit einer beispielhaften Kachel-ID 0815 bei der Head-Unit 110 angefragt, welche in einem nachfolgenden Schritt 330 auch an den Client 120 übermittelt wird.

Je nach Informationsbedarf, kann der Client 120 anschließend in einem Schritt 340 weitere zu der Topologie-Kachel 0815 benötigte Kartenattribute abfragen, wie z.B. die zulässige Höchstgeschwindigkeit betreffend eine oder mehrere Kanten (z.B. Straßen) der Topologie-Kachel. Dazu kann der Client 120 der Head-Unit 110 eine DatalD (hier: DatalD = 4711) zusenden, welche die gewünschten Kartenattribute bzw. DataDefinition beschreibt. Mit Hilfe der DatalD kann die entsprechende DataDefinition identifiziert werden und primitiven Datentypen eine Bedeutung zu geordnet werden.

In einem darauffolgenden Schritt 350 sendet die Head-Unit 110 die angeforderten Attribute entsprechend der DatalD = 4711 in einem durch die dementsprechende DataDefinition bestimmten Datenformat an den Client 120. Gemäß einigen Ausführungsbeispielen kann das Übermitteln des wenigstens einen Attributs also in einem an das Attribut angepassten Datenformat (DataDefinition) erfolgen. Dabei kann das Datenformat eine eindeutige Identifikation des Datenformats bzw. des Attributs und eine Beschreibung von in dem Datenformat enthaltenen Datentypen umfassen.

Gemäß dem gezeigten Beispiel können die von der Head-Unit 110 im Schritt 350 übermittelten Attribute zusätzlich noch eine Einstufung als dynamische Daten ("isTemporalTile" = yes) und gegebenenfalls. eine entsprechende Lebensdauer aufweisen. Mit anderen Worten kann also das wenigstens eine Attribut ein veränderliches oder volatiles Attribut umfassen. In manchen Ausführungsbeispielen kann die Beschreibung der in dem Datenformat enthaltenen Datentypen also eine Kennzeichnung eines veränderlichen Attributs und eine diesem zugeordnete Gültigkeitsdauer umfassen.

Wenn sich unter den angefragten Daten dynamische Daten befinden, kann der Client 120 bei einer Aktualisierung dieser Daten über diese Aktualisierung informiert werden. Die Head-Unit 110 wiederum kann über die Aktualisierung beispielsweise durch Car2X Kommunikationstechniken oder Backenddienste informiert werden. Im gezeigten Beispiel wird im Schritt 360 der Client 120 von der Head-Unit 110 über eine Veränderung des zu der Topologie-Kachel 0815 gehörigen Attributs 4711 informiert, so dass der Client 120 bei Bedarf in Schritt 370 die veränderten Attributsdaten bei der Head-Unit 110 anfragen kann. Schließlich sendet die Head-Unit 110 daraufhin die angefragten veränderten Attributsdaten an den Client 120.

Zusammenfassend unterscheiden manche Ausführungsbeispiele also zwischen zyklischer Basisübertragung und zusätzlicher Anfrage/Antwort. Die zyklische Basisübertragung kann verwendet werden, um dem Empfänger zyklisch mit relevanten und vom Empfänger angeforderten Basisdaten zu versorgen. Dazu zählt im Falle des vorgeschlagen ADAS Protokolls die Übertragung der aktuellen Position und optional eine Auswahl an Kartenattributen die an der aktuellen Position gelten. Darüber hinaus hat der Client die Möglichkeit über die bedarfsgesteuerte zusätzliche Anfrage/Antwort-Schnittstelle Karteninformationen direkt anzufragen. Ausführungsbeispiele können somit eine höhere Flexibilität erreichen als bisherige ADAS Konzepte.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der vorliegenden Erfindung, zumindest Teile davon, in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren (200; 300) zum Bereitstellen von Daten für ein Fahrerassistenzsystem (120) eines Kraftfahrzeugs, umfassend:
Übermitteln (210; 310) von Positionsdaten (130) betreffend eine Position des Kraftfahrzeugs an das Fahrerassistenzsystem (120);
lediglich bei Bedarf des Fahrerassistenzsystems (120) an zusätzlichen Informationen (150) zu den Positionsdaten, Anfragen (220; 320) der zusätzlichen Informationen bei einem Server (110); und
in Reaktion auf das bedarfsgesteuerte Anfragen (220; 230), Übermitteln (230; 330) der zusätzlichen Informationen (150) von dem Server (110) an das Fahrerassistenzsystem (120).

2. Verfahren (200; 300) nach Anspruch 1, wobei das Übermitteln (210; 310) der Positionsdaten periodisch erfolgt.

3. Verfahren (200; 300) nach Anspruch 1 oder 2, wobei das Anfragen (220; 320) der zusätzlichen Informationen ein Anfragen von mit den Positionsdaten assoziierten Karteninformationen einer digitalen Straßenkarte umfasst.

4. Verfahren (200; 300) nach Anspruch 3, wobei die Karteninformationen mit den Positionsdaten assoziierte Attribute und/oder topologische Informationen umfassen.

5. Verfahren (200; 300) nach einem der vorhergehenden Ansprüche, wobei das Anfragen (220; 320) der zusätzlichen Informationen ein Anfragen von mit den Positionsdaten assoziierten topologischen Daten umfasst.

6. Verfahren (200; 300) nach einem der vorhergehenden Ansprüche, wobei das Übermitteln (230; 330) der zusätzlichen Informationen ein Übermitteln von topologischen Daten aus mit den Positionsdaten assoziierten Kartenkacheln einer digitalen Straßenkarte umfasst.

7. Verfahren (200; 300) nach Anspruch 5 oder 6, wobei das Anfragen (220; 320) der zusätzlichen Informationen ferner ein Anfragen von wenigstens einem mit den topologischen Daten assoziierten Attribut umfasst, und wobei, in Reaktion auf das Anfragen (220; 320), das wenigstens eine Attribut von dem Server (110) an das Fahrerassistenzsystem (120) übermittelt wird.

8. Verfahren (200; 300) nach Anspruch 4 oder 7, wobei das Übermitteln (230; 330) des wenigstens einen Attributs in einem an das Attribut angepassten Datenformat erfolgt.

9. Verfahren (200; 300) nach Anspruch 8, wobei das Datenformat eine eindeutige Identifikation des Datenformats und eine Beschreibung von in dem Datenformat enthaltenen Datentypen umfasst.

10. Verfahren (200; 300) nach einem der Ansprüche 7 bis 9, wobei das wenigstens eine Attribut ein veränderliches Attribut umfasst.

11. Verfahren (200; 300) nach Anspruch 9 oder 10, wobei die Beschreibung der in dem Datenformat enthaltenen Datentypen eine Kennzeichnung eines veränderlichen Attributs und eine diesem zugeordnete Gültigkeitsdauer umfasst.

12. Verfahren (200; 300) nach Anspruch 9 oder 10, ferner umfassend:
Informieren (360) des Fahrerassistenzsystems (120) über ein verändertes Attribut.

13. Verfahren (200; 300) nach Anspruch 11 oder 12, wobei das Anfragen (220; 320) wenigstens eines Attributs ein erneutes Abfragen (370) des Attributs nach Ablauf seiner Gültigkeitsdauer umfasst.

14. Verfahren (200; 300) nach einem der vorhergehenden Ansprüche, wobei eine Kommunikation zwischen dem Server (110) und dem Fahrerassistenzsystem (120) über ein fahrzeuginternes Bussystem erfolgt.

15. Verfahren (200; 300) nach einem der vorhergehenden Ansprüche, wobei das Übermitteln (210; 310) der Positionsdaten ein ausschließliches Übermitteln der Positionsdaten umfasst und wobei das Übermitteln (220; 320) der zusätzlichen Informationen ein ausschließliches Übermitteln von Karteninformationen umfasst.

16. System (100) zum Bereitstellen von Daten für ein Fahrerassistenzsystem (120) eines Kraftfahrzeugs, umfassend:
wenigstens ein Fahrerassistenzsystem (120), das ausgebildet ist, um Positionsdaten betreffend eine Position des Kraftfahrzeugs zu empfangen und, um lediglich bei Bedarf an zusätzlichen Informationen (150) zu den Positionsdaten die zusätzlichen Informationen (150) bei einem Server (110) anzufragen.

17. Das System (100) nach Anspruch 16, ferner umfassend:
einen Server (110), der ausgebildet ist, um als Reaktion auf die Anfrage, die zusätzlichen Informationen (150) an das Fahrerassistenzsystem (120) zu übermitteln.

## Claims

1. Method (200; 300) for providing data for a driver assistance system (120) of a motor vehicle, comprising:
transmitting (210; 310) position data (130) relating to a position of the motor vehicle to the driver assistance system (120);
only upon demand of the driver assistance system (120) for additional information (150) relating to the position data, requesting (220; 320) the additional information from a server (110); and
in response to the demand-driven requesting (220; 230), transmitting (230; 330) the additional information (150) from the server (110) to the driver assistance system (120).

2. Method (200; 300) according to claim 1, wherein the transmitting (210; 310) of the position data is carried out periodically.

3. Method (200; 300) according to claim 1 or 2, wherein the requesting (220; 320) of the additional information comprises requesting map information of a digital road map associated with the position data.

4. Method (200; 300) according to claim 3, wherein the map information comprises attributes and/or topological information associated with the position data.

5. Method (200; 300) according to any one of the preceding claims, wherein the requesting (220; 320) of the additional information comprises requesting topological data associated with the position data.

6. Method (200; 300) according to any one of the preceding claims, wherein the transmitting (230; 330) of the additional information comprises transmitting topological data from map tiles of a digital road map associated with the position data.

7. Method (200; 300) according to claim 5 or 6, wherein the requesting (220; 320) of the additional information further comprises requesting at least one attribute associated with the topological data, and wherein, in response to the requesting (220; 320), the at least one attribute is transmitted from the server (110) to the driver assistance system (120).

8. Method (200; 300) according to claim 4 or 7, wherein the transmitting (230; 330) of the at least one attribute is carried out in a data format adapted to the attribute.

9. Method (200; 300) according to claim 8, wherein the data format comprises a unique identification of the data format and a description of data types contained in the data format.

10. Method (200; 300) according to any one of claims 7 to 9, wherein the at least one attribute comprises a variable attribute.

11. Method (200; 300) according to claim 9 or 10, wherein the description of the data types contained in the data format comprises an identification of a variable attribute and a period of validity assigned thereto.

12. Method (200; 300) according to claim 9 or 10, further comprising:
informing (360) the driver assistance system (120) about a changed attribute.

13. Method (200; 300) according to claim 11 or 12, wherein the requesting (220; 320) of at least one attribute comprises a renewed querying (370) of the attribute after expiry of its period of validity.

14. Method (200; 300) according to any one of the preceding claims, wherein a communication between the server (110) and the driver assistance system (120) is carried out via an in-vehicle bus system.

15. Method (200; 300) according to any one of the preceding claims, wherein the transmitting (210; 310) of the position data comprises exclusively transmitting the position data and wherein the transmitting (220; 320) of the additional information comprises exclusively transmitting map information.

16. System (100) for providing data for a driver assistance system (120) of a motor vehicle, comprising:
at least one driver assistance system (120) which is configured to receive position data relating to a position of the motor vehicle and, to request the additional information (150) from a server (110) only upon demand for additional information (150) relating to the position data.

17. The system (100) according to claim 16, further comprising:
a server (110) which is configured to transmit the additional information (150) to the driver assistance system (120) in response to the request.

## Revendications

1. Procédé (200 ; 300) pour fournir des données pour un système d'assistance au conducteur (120) d'un véhicule automobile, comprenant :
la transmission (210 ; 310) de données de position (130) concernant une position du véhicule automobile au système d'assistance au conducteur (120) ;
uniquement en cas de besoin du système d'assistance au conducteur (120) en informations supplémentaires (150) relatives aux données de position, la demande (220 ; 320) des informations supplémentaires auprès d'un serveur (110) ; et
en réaction à la demande commandée par les besoins (220 ; 230), la transmission (230 ; 330) des informations supplémentaires (150) du serveur (110) au système d'assistance au conducteur (120).

2. Procédé (200 ; 300) selon la revendication 1, dans lequel la transmission (210 ; 310) des données de position s'effectue périodiquement.

3. Procédé (200 ; 300) selon la revendication 1 ou 2, dans lequel la demande (220 ; 320) des informations supplémentaires comprend une demande d'informations cartographiques d'une carte routière numérique associées aux données de position.

4. Procédé (200 ; 300) selon la revendication 3, dans lequel les informations cartographiques comprennent des attributs et/ou des informations topologiques associés aux données de position.

5. Procédé (200 ; 300) selon l'une quelconque des revendications précédentes, dans lequel la demande (220 ; 320) des informations supplémentaires comprend une demande de données topologiques associées aux données de position.

6. Procédé (200 ; 300) selon l'une quelconque des revendications précédentes, dans lequel la transmission (230 ; 330) des informations supplémentaires comprend une transmission de données topologiques provenant de tuiles cartographiques d'une carte routière numérique associées aux données de position.

7. Procédé (200 ; 300) selon la revendication 5 ou 6, dans lequel la demande (220 ; 320) des informations supplémentaires comprend en outre une demande d'au moins un attribut associé aux données topologiques, et dans lequel, en réaction à la demande (220 ; 320), l'au moins un attribut est transmis du serveur (110) au système d'assistance au conducteur (120).

8. Procédé (200 ; 300) selon la revendication 4 ou 7, dans lequel la transmission (230 ; 330) de l'au moins un attribut s'effectue dans un format de données adapté à l'attribut.

9. Procédé (200 ; 300) selon la revendication 8, dans lequel le format de données comprend une identification unique du format de données et une description de types de données contenus dans le format de données.

10. Procédé (200 ; 300) selon l'une quelconque des revendications 7 à 9, dans lequel l'au moins un attribut comprend un attribut variable.

11. Procédé (200 ; 300) selon la revendication 9 ou 10, dans lequel la description des types de données contenus dans le format de données comprend une identification d'un attribut variable et une durée de validité qui lui est associée.

12. Procédé (200 ; 300) selon la revendication 9 ou 10, comprenant en outre : l'information (360) du système d'assistance au conducteur (120) sur un attribut modifié.

13. Procédé (200 ; 300) selon la revendication 11 ou 12, dans lequel la demande (220 ; 320) d'au moins un attribut comprend une nouvelle interrogation (370) de l'attribut après expiration de sa durée de validité.

14. Procédé (200 ; 300) selon l'une quelconque des revendications précédentes, dans lequel une communication entre le serveur (110) et le système d'assistance au conducteur (120) s'effectue par l'intermédiaire d'un système de bus interne au véhicule.

15. Procédé (200 ; 300) selon l'une quelconque des revendications précédentes, dans lequel la transmission (210 ; 310) des données de position comprend une transmission exclusive des données de position et dans lequel la transmission (220 ; 320) des informations supplémentaires comprend une transmission exclusive d'informations cartographiques.

16. Système (100) pour fournir des données pour un système d'assistance au conducteur (120) d'un véhicule automobile, comprenant :
au moins un système d'assistance au conducteur (120) qui est conçu pour recevoir des données de position concernant une position du véhicule automobile et, pour demander les informations supplémentaires (150) auprès d'un serveur (110) uniquement en cas de besoin en informations supplémentaires (150) relatives aux données de position.

17. Le système (100) selon la revendication 16, comprenant en outre :
un serveur (110) qui est conçu pour transmettre les informations supplémentaires (150) au système d'assistance au conducteur (120) en réaction à la demande.
